# FASCICULE DE BREVET EUROPEEN

(11) **EP 1 037 352 B1**
(45) Date de publication et mention de la délivrance du brevet: **02.01.2004**
(21) Numéro de dépôt: 00400639.1
(22) Date de dépôt: 09.03.2000
(51) Int. Cl.: H02G 15/18, B29C 61/06, B29C 65/76

(54) **Support de manchon rétractable pour raccordement de câble électrique et dispositif de raccordement**
Träger für schrumpfbare Muffe zum Verbinden von elektrischen Kabeln und Vorrichtung zum Verbinden
Support for shrinkable sleeve for electrical cable connection and connection device

(30) Priorité: 09.03.1999 FR 9902908
(43) Date de publication de la demande: 20.09.2000
(73) Titulaire: CABLES PIRELLI, F-94417 Saint Maurice (FR)
(72) Inventeur: Tognali, Stéphane, 94350 Villiers sur Marne (FR)
(74) Mandataire: Casalonga, Axel

(56) Documents cités:
- EP-A- 0 279 015
- WO-A-98/45918
- US-A- 3 796 370
- US-A- 3 824 331
- US-A- 4 402 685

## Description

La présente invention a pour objet un support rigide tubulaire en matière synthétique capable de supporter un manchon pré-expansé avant sa rétraction à froid sur un raccordement de câble électrique ainsi qu'un dispositif de raccordement utilisant un tel support.

L'invention s'applique à tout type de raccordement notamment les jonctions (raccordement entre deux câbles) mais aussi les matériels de raccordement borgnes avec un seul support (comme les extrémités ou les prises sur les transformateurs).

On sait que les jonctions de câble électrique ou têtes de câble électrique doivent être protégées et l'on utilise à cet effet généralement un manchon de protection rétractable à froid dont le diamètre est suffisant pour qu'il puisse être correctement mis en place sur le câble, le manchon après rétraction enserrant la jonction à protéger. Avant sa mise en place sur la jonction, le manchon pré-expansé est installé sur un support rigide tubulaire qui facilite sa mise en place, le support étant ensuite extrait pour permettre la contraction du manchon.

On a déjà décrit dans la demande de brevet WO/9845918, qui est considéré comme l'état de la technique le plus proche, un élément-support tubulaire pour jonction de câble électrique, présentant une prédécoupe selon une incision hélicoïdale ou selon une génératrice, afin de permettre sa séparation du câble électrique après extraction du manchon rétractable.

La réalisation pratique des moyens permettant de faciliter la séparation en deux ou plusieurs parties du support tubulaire, présente néanmoins des difficultés. Il convient, en effet, que le support tubulaire soit suffisamment résistant pour s'opposer à l'écrasement malgré la forte pression exercée par le manchon rétractable avant l'installation sur la jonction électrique. Il importe, par ailleurs, que la séparation en deux ou plusieurs parties du support tubulaire puisse se faire aisément sur le chantier, de préférence sans qu'il soit nécessaire d'utiliser un outillage particulier.

La réalisation de zones frangibles destinées à permettre cette séparation est particulièrement délicate lorsque le support tubulaire est réalisé par extrusion d'une matière synthétique. La formation de fentes ou de perforations est en effet pratiquement impossible lors de l'extrusion elle-même et nécessite l'intervention d'une opération ultérieure.

La présente invention a pour objet de résoudre d'une manière simple ces difficultés et de fournir un support rigide tubulaire en matière synthétique qui puisse être aisément séparé en deux ou plusieurs parties après extraction du manchon rétractable et ce, sans aucun outillage particulier, le support étant réalisé par extrusion d'une matière synthétique.

Tel qu'il est revendiqué, le dispositif de raccordement de câble électrique comprend un support rigide tubulaire en matière synthétique associé à un manchon pré-expansé capable de se rétracter à froid après extraction du support rigide en enserrant le câble. Le support rigide tubulaire comporte sur au moins deux génératrices, une zone de rupture sécable de façon à permettre la découpe du support en au moins deux parties. Selon l'invention, la zone de rupture sécable comprend un cordon de liaison continu co-extrudé avec le support, en une matière synthétique différente de celle du support.

Selon le procédé d'extraction d'un support rigide tubulaire après rétraction à froid d'un manchon pré-expansé sur un raccordement de câble électrique, on utilise un support rigide tubulaire comportant sur au moins deux génératrices, une zone de rupture sécable de façon à permettre la découpe du support en au moins deux parties. Conformément à l'invention, l'on découpe le support dans au moins une zone de rupture sécable le long d'un cordon de liaison continu co-extrudé avec le support, en une matière synthétique différente de celle du support et on procède à l'ouverture du support en frappant celui-ci à l'endroit des zones de rupture sécable.

Tel qu'il est également revendiqué, le support rigide tubulaire en matière synthétique capable de supporter un manchon pré-expansé avant sa rétraction à froid sur un raccordement de câbles électrique, comporte sur au moins deux génératrices, une zone de rupture sécable de façon à permettre la découpe du support en au moins deux parties. Selon l'invention la zone de rupture sécable comprend un cordon de liaison continu co-extrudé avec le support, en une matière synthétique différente de celle du support.

Le support rigide tubulaire selon la présente invention est réalisé en matière synthétique et est capable de supporter un manchon pré-expansé avant sa rétraction à froid sur un raccordement de câble électrique. Le manchon exerce une pression sur la surface externe du support. Le support comporte, sur au moins une génératrice, une zone de rupture sécable de façon à permettre la découpe du support en au mois deux parties. Selon l'invention, la zone de rupture sécable comprend un cordon continu co-extrudé avec le support, en une matière synthétique différente de celle du support.

Le cordon continu est par exemple en élastomère thermoplastique.

Le cordon continu est de préférence en contact continu, sur les bords des deux parties du support, avec la matière constitutive dudit support, de façon à séparer complètement les deux bords l'un de l'autre en évitant ainsi que ces bords viennent se recoller à l'issue de l'extrusion.

Dans un mode de réalisation de l'invention particulièrement adapté au cas où le manchon rétractable exerce de fortes pressions sur le support rigide tubulaire, la zone de rupture sécable comprend un cordon continu en une matière synthétique anti-adhésive par rapport à la matière constitutive du support, co-extrudé avec le support. Le cordon anti-adhésif peut être associé à un cordon de liaison, co-extrudé avec le support, par exemple en une matière élastomère thermoplastique. La matière constitutive du cordon anti-adhésif présente de préférence une résistance mécanique supérieure à celle du cordon de liaison. Le cordon anti-adhésif renforce ainsi le support rigide sans pour autant rendre plus difficile la rupture de la zone sécable grâce à son caractère anti-adhésif.

Le cordon anti-adhésif peut être avantageusement disposé radialement à l'intérieur du support tandis que le cordon de liaison est disposé radialement à l'extérieur du support, le profil du cordon anti-adhésif étant tel qu'il ne puisse pas s'échapper vers l'intérieur du support.

Dans une variante, la zone de rupture sécable comprend deux cordons de liaison disposés radialement à l'intérieur et à l'extérieur et enserrant un cordon en une matière synthétique antiadhésive.

Dans une autre variante, la zone de rupture sécable comprend en outre une portion de liaison co-extrudée avec le support et constituée de la même matière synthétique que celle du support.

De préférence, la zone de rupture sécable, et en particulier le cordon continu qu'elle comporte, permet au support de résister à la pression, exercée sur sa surface périphérique, notamment en raison de sa géométrie qui doit permettre aux contraintes, en particulier périphériques, de s'équilibrer au niveau de cette zone de rupture.

L'invention sera mieux comprise à l'étude de la description détaillée de quelques exemples de réalisation de l'invention, exemples nullement limitatifs et illustrés par les dessins annexés, sur lesquels :
la figure 1 représente schématiquement et partiellement en coupe un exemple de réalisation d'un dispositif de jonction utilisant deux demi-supports de forme cylindrique;
la figure 2 est une vue en perspective d'un support rigide tubulaire selon l'invention;
la figure 3 est une vue en perspective du support de la figure 2 après séparation en plusieurs parties;
la figure 4 est une vue en coupe partielle de la zone de rupture sécable pratiquée le long d'un support selon l'invention, selon un premier mode de réalisation;
les figures 5 à 12 illustrent en coupe partielle d'autres exemples de réalisation de la zone de rupture sécable.

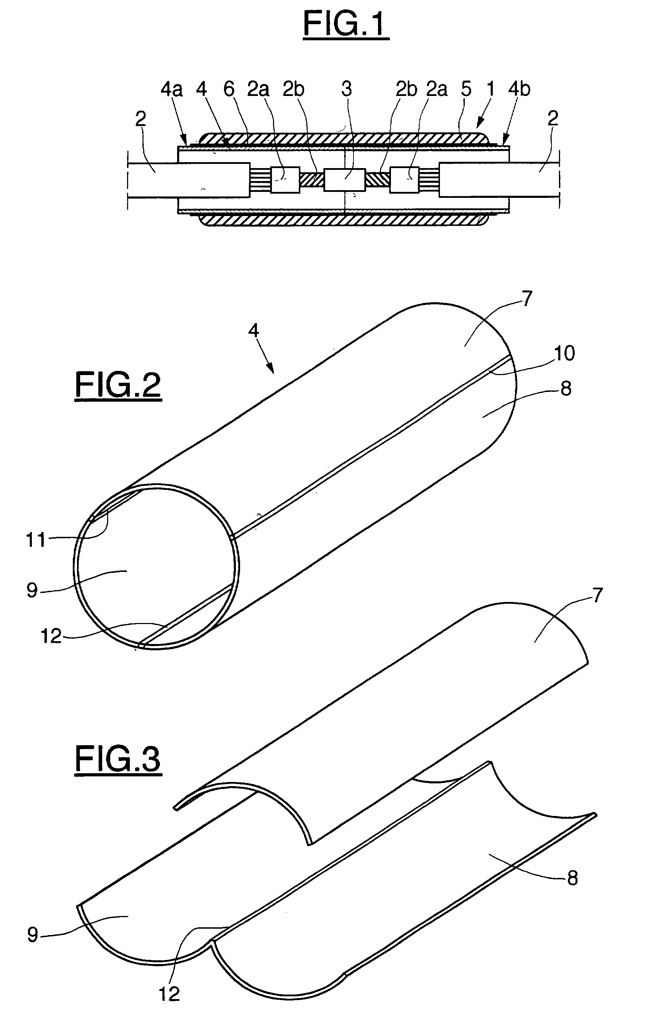

Tel qu'il est illustré selon la figure 1, le dispositif de jonction de câble électrique référencé 1 dans son ensemble est destiné à coopérer avec deux câbles électriques 2 dont les extrémités 2a ont été dénudées, les parties dénudées 2b ayant été réunies par un connecteur 3. Le dispositif de jonction 1 a pour objet de protéger la jonction et le connecteur 3. A cet effet, le dispositif 1 a été enfilé sur l'extrémité de l'un des câbles électriques 2 avant la réalisation de la jonction et est ensuite placé en position centrée par rapport au connecteur 3 comme illustré sur la figure 1. Le dispositif de jonction 1 comprend un support 4 tubulaire, rigide, constitué dans l'exemple illustré sur la figure 1 par deux demi-supports 4a, 4b de dimensions identiques et de forme générale cylindrique à section circulaire.

Un manchon tubulaire 5 pré-expansé et capable de se rétracter à froid enserre l'élément-support tubulaire 4 sur la majeure partie de sa longueur. Le manchon 5 peut être réalisé en élastomère à base de silicone.

Dans l'exemple illustré, l'élément-support 4 est recouvert sur la partie de sa surface extérieure enserrée par le manchon 5 par une pellicule de graisse non fluante illustrée sur la figure 1 sous la forme d'un trait plein référencé 6. On pourra se reporter, pour plus de précisions, sur un tel mode de réalisation, à la demande de brevet WO/9845918.

Bien que, dans ce mode de réalisation, le support tubulaire 4 soit réalisé sous la forme de deux demi-supports 4a, 4b, de forme générale cylindrique, on comprendra que la présente invention s'applique de la même manière à des éléments-supports réalisés d'une seule pièce et présentant d'autres formes, par exemple conique ou tronconique.

Tel qu'illustré sur la figure 2, le support tubulaire rigide 4 présente une forme générale cylindrique et est constitué de trois parties 7, 8 et 9, reliées entre elles par des zones de rupture sécables formées chacune par un cordon continu 10, 11, 12 disposé le long d'une génératrice et écartées de 120° les unes des autres. Le cordon continu 10, 11, 12 est globalement disposé dans un plan radial ce qui permet un équilibre des contraintes, notamment périphériques, au niveau des zones de rupture.

Comme illustré sur la figure 3, le support 4 peut être ouvert par déchirage des deux cordons de liaison 10 et 11, de façon à séparer le secteur cylindrique 7 des deux secteurs 8 et 9 qui, dans l'exemple illustré sur la figure 3, restent liés entre eux par le cordon de liaison 12 jouant le rôle d'une charnière. On comprend que le support 4 peut être ainsi séparé des câbles 2 après avoir été extrait du manchon rétractable 5 illustré sur la figure 1. On pourrait bien entendu également déchirer le cordon 12 en séparant ainsi les trois secteurs 7, 8 et 9. En variante, le support 4 pourrait ne comporter que deux cordons de liaison, disposés de façon diamétralement opposée le long de deux génératrices, ce qui suffirait pour permettre l'ouverture du support et sa séparation du câble. Bien que le support 4 illustré soit de forme générale cylindrique, on comprendra qu'une forme différente, par exemple conique ou tronconique, pourrait être utilisée sans modification majeure.

Le support tubulaire 4 tel qu'il est illustré sur la figure 2, est obtenu par extrusion d'une matière synthétique présentant des caractéristiques de résistance suffisantes pour résister aux efforts de compression exercés par le manchon rétractable 5 lors du stockage du dispositif 1 dans son ensemble avant utilisation. A titre de matières synthétiques utilisables, on peut citer le polypropylène. Les cordons des zones de rupture sécables séparant les éléments 7, 8 et 9, sont réalisés selon l'invention au moyen d'un matériau synthétique de liaison facilement sécable sans outil particulier et assurant une bonne liaison par adhésion avec le matériau synthétique constituant les éléments rigides 7, 8 et 9.

A titre d'exemple, on pourra utiliser, lorsque le matériau des éléments rigides 7, 8 et 9 est du polypropylène, un élastomère thermoplastique pour réaliser les cordons de liaison 10, 11 et 12. On obtient en effet ainsi une zone de rupture facilement sécable, assurant une bonne étanchéité pour la graisse qui peut recouvrir la surface extérieure du support 4 et assurant une bonne liaison des éléments 7, 8 et 9.

La réalisation des cordons 10, 11, 12 des zones de rupture sécables par co-extrusion avec le matériau synthétique constituant les éléments rigides 7, 8 et 9, peut se faire de différentes manières.

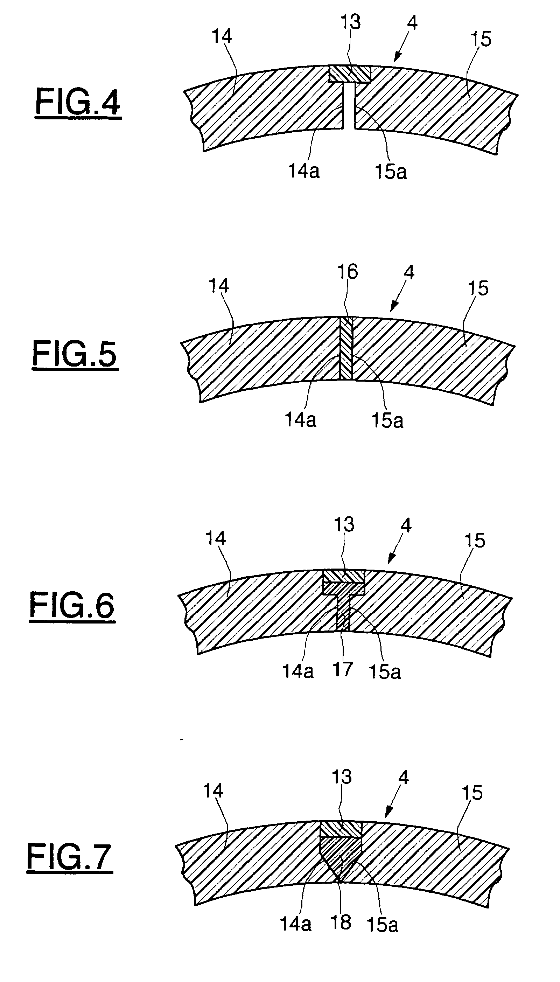

Dans le mode de réalisation illustré sur la figure 4, le matériau de liaison sécable est extrudé sous la forme d'un mince cordon 13 assurant la liaison des deux bords en regard 14 et 15 de deux parties du support rigide 4. Le cordon 13 est disposé au voisinage de la surface externe du support 4, de façon à éviter toute excroissance ou tout enfoncement à l'endroit du cordon de liaison 13 qui pourrait gêner l'extraction du support rigide 4 lors de l'utilisation du dispositif de jonction. Le cordon 13 est globalement disposé dans un plan radial ce qui permet un équilibre des contraintes, notamment périphériques, au niveau de la zone de rupture. Dans le mode de réalisation de la figure 4, les lèvres en regard 14a, 15a des deux bords 14, 15 restent écartées l'une de l'autre pendant l'extrusion. Ultérieurement, les deux lèvres 14a, 15a peuvent venir l'une contre l'autre sous la pression exercée par une gaine externe. L'étanchéité vis-à-vis de la graisse est en outre assurée par le cordon du matériau de liaison 13. Le cordon 13 réalise une génératrice sécable qui peut être ouverte sans outillage spécifique, par exemple en frappant le support rigide 4 à l'aide d'un maillet à l'endroit du cordon 13.

Un tel mode de réalisation peut présenter des difficultés lorsque, à la sortie de la tête d'extrusion, le matériau constitutif des bords 14 et 15 risque de subir un gonflement, les lèvres 14a, 15a venant se recoller l'une l'autre avant refroidissement complet de la matière extrudée. Dans ce cas, il deviendrait impossible de séparer les éléments 14, 15 en déchirant simplement le cordon de liaison 13.

La figure 5 illustre une variante qui résout ce type de difficulté. Dans ce mode de réalisation, la zone de rupture sécable comprend un cordon de liaison réalisé sous la forme d'une couche 16 du matériau de liaison interposé entre les lèvres 14a et 15a des deux éléments 14, 15 du support rigide. La couche de liaison 16 s'étend de l'intérieur vers l'extérieur et occupe tout l'espace situé entre les lèvres 14a, 15a, évitant ainsi tout recollement des éléments séparés 14, 15 après extrusion. Là encore, le cordon 16 est globalement disposé dans un plan radial ce qui permet un équilibre des contraintes, notamment périphériques, au niveau de la zone de rupture.

Les deux modes de réalisation illustrés sur les figures 4 et 5 qui viennent d'être décrits, peuvent être utilisés dans des dispositifs de jonction pour lesquels la pression exercée par le manchon rétractable reste relativement faible.

Dans le cas où il est nécessaire qu'une pression plus importante soit exercée par le manchon rétractable, les modes de réalisation des figures 4 et 5 risqueraient d'entraîner un affaissement vers l'intérieur des éléments 14, 15 sous l'action de la pression exercée par le manchon rétractable, le cordon de liaison 13 ou 16 ne présentant pas une résistance suffisante pour résister à une telle pression élevée.

L'invention prévoit, dans ce cas, l'adjonction d'un cordon d'un matériau anti-adhésif.

Dans le mode de réalisation illustré sur la figure 6, où les éléments identiques portent les mêmes références, le cordon 13 de matériau de liaison analogue à celui illustré sur la figure 4, est associé lors de l'extrusion à un cordon supplémentaire d'un matériau anti-adhésif 17 présentant en section la forme d'un T dont la partie horizontale sur la figure 6 est en contact avec le cordon 13, tandis que la branche verticale sur la figure 6 est interposée entre les lèvres 14a et 15a des deux éléments 14, 15. De cette manière, on évite, comme c'était le cas dans le mode de réalisation de la figure 5, tout risque de recollement du matériau des deux éléments 14, 15 après extrusion grâce à l'existence du matériau anti-adhésif du cordon supplémentaire 17. De plus, la forme adoptée pour le cordon supplémentaire 17 permet d'éviter tout risque de démoulage, c'est-à-dire de chute du cordon 17 vers l'intérieur sous l'action d'une déformation des éléments 14, 15 en réponse à la pression exercée par le manchon rétractable, puisque la barre horizontale du T reste noyée dans la matière des éléments 14, 15 et s'oppose à toute extraction du cordon 17 vers l'intérieur. Les cordons 13 et 17 sont globalement disposés dans un plan radial ce qui permet un équilibre des contraintes, notamment périphériques, au niveau de la zone de rupture.

Lors de l'utilisation du support 4, le cordon de liaison 13 peut être aisément déchiré et les éléments individuels 14, 15 séparés, étant donné que le matériau du cordon supplémentaire 17 n'adhère pas sur le matériau constitutif des éléments 14, 15. De plus, le matériau anti-adhésif du cordon 17 est choisi parmi les matériaux résistant à la compression, de façon à assurer la résistance à l'écrasement du support rigide 4 malgré les fortes pressions exercées par le manchon rétractable.

Parmi les matériaux que l'on peut utiliser à titre de matériaux anti-adhésifs et résistant à la compression, on notera en particulier l'acrylonitrile-butadiène-styrène (ABS) qui ne colle pas au polypropylène constitutif des éléments 14, 15 ni à l'élastomère du cordon 13.

La variante illustrée sur la figure 7 sur laquelle les éléments identiques portent les mêmes références, montre un cordon supplémentaire 18 ou un matériau anti-adhésif résistant à la compression dont la section se termine vers l'intérieur par une zone en forme de coin empêchant également tout risque de démoulage et de chute vers l'intérieur. Le cordon 13 s'étend à l'extérieur entre les éléments 14, 15. Les cordons 13 et 18 sont globalement disposés dans un plan radial ce qui permet un équilibre des contraintes, notamment périphériques, au niveau des zones de rupture.

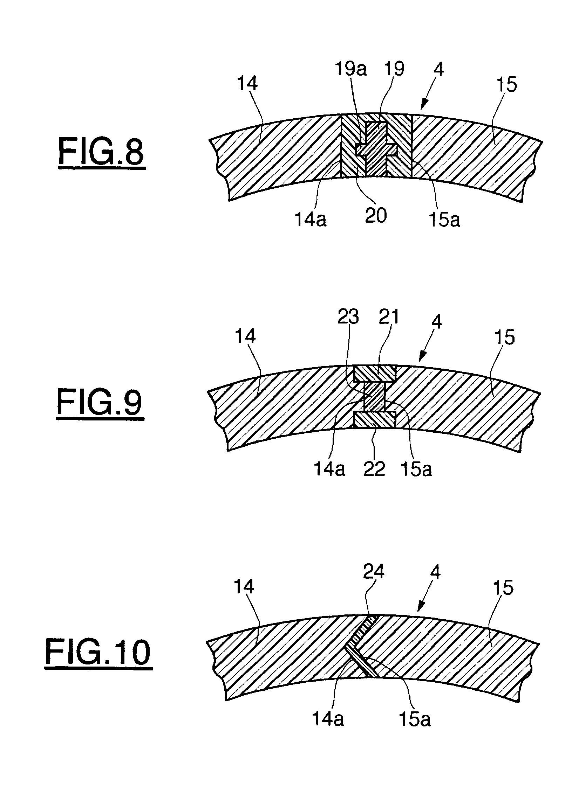

Dans le mode de réalisation illustré sur la figure 8, le cordon de matériau anti-adhésif 19 présente en section la forme générale d'une croix dont les branches horizontales empêchent également tout risque de démoulage. Dans ce mode de réalisation, la bande de matière anti-adhésive 19 est enserrée sur ses côtés et sur sa périphérie extérieure par le matériau de liaison du cordon sécable 20. Le cordon 20 est donc ici en contact sur toute l'épaisseur du support 4 avec les lèvres 14a, 15a des éléments séparables 14, 15. Les cordons 19 et 20 sont globalement disposés dans un plan radial ce qui permet un équilibre des contraintes, notamment périphériques, au niveau de la zone de rupture.

Sur la variante de la figure 9, la séparation des éléments 14, 15 est faite par un cordon externe 21 réalisé en matériau de liaison et un cordon interne 22 réalisé dans le même matériau. Pour assurer la résistance à la compression, un cordon 23 en matériau anti-adhésif est co-extrudé entre les lèvres 14a, 15a et sépare les deux cordons 21, 22. Les cordons 21 à 23 sont globalement disposés dans un plan radial ce qui permet un équilibre des contraintes, notamment périphériques, au niveau de la zone de rupture.

La variante de la figure 10 illustre l'utilisation d'un cordon de matériau de liaison 24 ayant en section la forme d'un chevron et séparant les lèvres 14a, 15a qui sont respectivement réalisées de manière concave et convexe. Un tel mode de réalisation permet de résister à des pressions supérieures à celles que l'on peut utiliser avec les variantes des figures 4 et 5, tout en évitant d'avoir à extruder également un cordon continu supplémentaire du matériau anti-adhésif comme dans les variantes des figures 6 à 9. Là encore, la forme géométrique du cordon permet un équilibre des contraintes, notamment périphériques, au niveau de la zone de rupture.

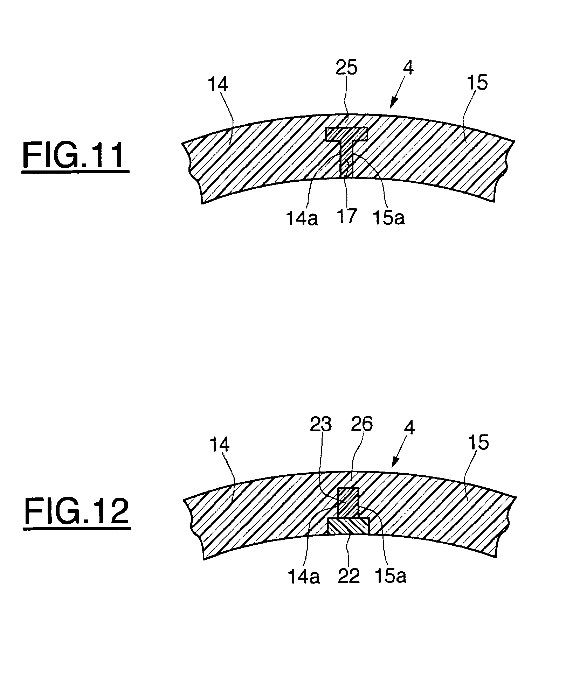

Dans le mode de réalisation illustré sur la figure 11, un cordon réalisé en un matériau anti-adhésif 17 présentant en section la forme d'un T est disposé comme dans le mode de réalisation illustré sur la figure 6 avec sa branche verticale interposée entre les lèvres 14a et 15a des deux éléments 14, 15. Dans cette variante, on n'utilise pas le cordon 13 de matériau de liaison prévu dans le mode de réalisation de la figure 6. Au contraire, la matière synthétique constituée des éléments 14, 15 forme, dans une zone 25 située radialement à l'extérieur de la branche horizontale du T du cordon 17, une zone fragilisée s'étendant selon une génératrice du support. Le cordon 17 est globalement disposé dans un plan radial ce qui permet un équilibre des contraintes, notamment périphériques, au niveau de la zone de rupture.

La présence du cordon 17 en matière anti-adhésive et les dimensions de ce dernier par rapport à l'épaisseur des éléments 14, 15, permettent d'extraire aisément le support du dispositif de raccordement. A cet effet, on procède à l'ouverture du support en frappant celui-ci à l'endroit de la zone 25, par exemple à l'aide d'un maillet. A cet égard, on notera que le cordon 17 s'étend sur plus de la moitié de l'épaisseur des éléments 14, 15 et de préférence sur environ 80% de cette épaisseur. Les chocs pratiqués sur la zone mince 25 entraînent la formation de fissures qui peuvent alors se propager aisément sur toute la longueur de la génératrice et réaliser l'ouverture souhaitée des deux éléments 14, 15 du support.

Dans la variante de la figure 12 qui s'apparente au mode de réalisation de la figure 9, le cordon externe de liaison 21 est supprimé et remplacé par une portion de matière constitutive des éléments 14, 15 dans la zone 26. L'épaisseur de matière de la zone 26 est choisie, comme c'est le cas dans la variante de la figure 11, de façon à n'occuper qu'une faible partie de l'épaisseur totale des éléments 14, 15, de sorte qu'il est possible d'ouvrir le support aisément, par exemple en frappant au voisinage de la zone 26 à l'aide d'un maillet comme précédemment indiqué. Le cordon de la figure 12 est globalement disposé dans un plan radial ce qui permet un équilibre des contraintes, notamment périphériques, au niveau de la zone de rupture.

## Revendications

1. Dispositif de raccordement de câble électrique comprenant un support (4) rigide tubulaire en matière synthétique associé à un manchon pré-expansé (5) capable de se rétracter à froid après extraction du support rigide en enserrant le câble, le support rigide tubulaire comportant sur au moins deux génératrices, une zone de rupture sécable de façon à permettre la découpe du support en au moins deux parties, **caractérisé par le fait que** la zone de rupture sécable comprend un cordon de liaison continu (10, 11, 12) co-extrudé avec le support, en une matière synthétique différente de celle du support.

2. Procédé d'extraction d'un support rigide tubulaire après rétraction à froid d'un manchon pré-expansé sur un raccordement de câble électrique dans lequel on utilise un support rigide tubulaire comportant sur au moins deux génératrices, une zone de rupture sécable de façon à permettre la découpe du support en au moins deux parties, **caractérisé par le fait que** l'on découpe le support dans au moins une zone de rupture sécable le long d'un cordon de liaison continu (10, 11, 12) co-extrudé avec le support, en une matière synthétique différente de celle du support et qu'on procède à l'ouverture du support en frappant celui-ci à l'endroit des zones de rupture sécable.

3. Support rigide tubulaire en matière synthétique capable de supporter un manchon pré-expansé (5) avant sa rétraction à froid sur un raccordement de câble électrique, comportant, sur au moins deux génératrices, une zone de rupture sécable de façon à permettre la découpe du support en au moins deux parties, **caractérisé par le fait que** la zone de rupture sécable comprend un cordon de liaision continu (10, 11, 12) co-extrudé avec le support, en une matière synthétique différente de celle du support.

4. Dispositif selon la revendication 1, **caractérisé par le fait que** le cordon de liaison est en élastomère thermoplastique adhérent sur la matière constitutive du support.

5. Dispositif selon les revendications 1 ou 4 **caractérisé par le fait que** le cordon de liaison (16) est en contact continu sur les bords longitudinaux en regard l'un de l'autre des deux parties du support avec la matière constitutive dudit support de façon à séparer complètement les deux bords l'un de l'autre.

6. Dispositif selon la revendication 1, **caractérisé par le fait que** la zone de rupture sécable comprend un cordon continu supplémentaire (17, 18, 19, 23) en une matière synthétique anti-adhésive par rapport à la matière constitutive du support (4), co-extrudé avec le support.

7. Dispositif selon la revendication 6, **caractérisé par le fait que** le cordon supplémentaire anti-adhésif (17, 18) est disposé radialement à l'intérieur du support (4) tandis que le cordon de liaison (13) est disposé radialement à l'extérieur du support, le profil du cordon anti-adhésif étant tel qu'il ne puisse pas s'échapper vers l'intérieur du support.

8. Dispositif selon la revendication 6, **caractérisé par le fait que** la zone de rupture sécable comprend deux cordons de liaison (21, 22) disposés radialement à l'intérieur et à l'extérieur et enserrant un cordon anti-adhésif (23).

9. Dispositif selon l'une des revendications 6 à 8, **caractérisé par le fait que** la matière constitutive du cordon anti-adhésif présente une résistance mécanique supérieure à celle du cordon de liaison.

10. Dispositif selon la revendication 6, **caractérisé par le fait que** la zone de rupture sécable comprend en outre une portion de liaison (25, 26) co-extrudée le support (4) et constituée de la même matière synthétique que celle du support.

11. Dispositif selon la revendication 10, **caractérisé par le fait que** la portion de liaison (23, 26) recouvre le cordon anti-adhésif (17, 23) à l'extérieur du support.

12. Dispositif selon l'une quelconque des revendications 6 à 11, **caractérisé par le fait que** le cordon anti-adhésif est réalisé en ABS.

13. Dispositif selon l'une quelconque des revendications 1 et 4 à 12, **caractérisé par le fait que** le support est realisé en polypropylène.

14. Support rigide tubulaire selon la revendication 3, **caractérisé par le fait que** le cordon est en élastomère thermoplastique adhérent sur la matière constitutive du support.

15. Support rigide tubulaire selon les revendications 3 ou 14, **caractérisé par le fait que** le cordon (16) est en contact continu sur les bords longitudinaux en regard l'un de l'autre des deux parties du support avec la matière constitutive dudit support de façon à séparer complètement les deux bords l'un de l'autre.

16. Support rigide tubulaire selon la revendication 3, **caractérisé par le fait que** la zone de rupture sécable comprend un cordon continu supplémentaire (17, 18, 19, 23) en une matière synthétique anti-adhésive par rapport à la matière constitutive du support, co-extrudé avec le support.

17. Support rigide tubulaire selon la revendication 16, **caractérisé par le fait que** le cordon supplémentaire anti-adhésif (17, 18) est disposé radialement à l'intérieur du support tandis que le cordon de liaison (13) est disposé radialement à l'extérieur du support, le profil du cordon anti-adhésif étant tel qu'il ne puisse pas s'échapper vers l'intérieur du support.

18. Support rigide tubulaire selon la révendication 16, **caractérisé par le fait que** la zone de rupture sécable comprend deux cordons de liaison (21, 22) disposés radialement à l'intérieur et à l'extérieur et enserrant un cordon anti-adhésif (23).

19. Support rigide tubulaire selon l'une des revendications 16 à 18, **caractérisé par le fait que** la matière constitutive du cordon anti-adhésif présente une résistance mécanique supérieure à celle du cordon de liaison.

20. Support rigide tubulaire selon la revendication 16, **caractérisé par le fait que** la zone de rupture sécable comprend en outre une portion de liaison (25,26) co-extrudée avec le support et constituée de la même matière synthétique que celle du support.

21. Support rigide tubulaire selon la revendication 20, **caractérisé par le fait que** la portion de liaison (25, 26) recouvre le cordon anti-adhésif (17, 23) à l'extérieur du support.

22. Support rigide tubulaire selon l'une quelconque des revendications 16 à 21, **caractérisé par le fait que** le cordon anti-adhésif est réalisé en ABS.

23. Support rigide tubulaire selon l'une quelconque des revendications 3 et 16 à 22, **caractérisé par le fait qu'**il est réalisé en polypropylène.

## Patentansprüche

1. Anschlusseinrichtung für ein elektrisches Kabel mit einer festen röhrenförmigen Halterung (4) aus synthetischem Material, welche mit einer vorgedehnten Hülse (5) zusammengefügt ist, die sich bei Kälte zusammenziehen kann, nachdem die feste Halterung herausgezogen worden ist, so dass die Hülse das Kabel umschließt, wobei die feste röhrenförmige Halterung auf zumindest zwei Mantellinien einen teilbaren Bruchbereich aufweist, um ein Zerteilen der Halterung in zumindest zwei Teile zu ermöglichen, **dadurch gekennzeichnet, dass** der teilbare Bruchbereich ein kontinuierliches Verbindungsband (10, 11, 12) aufweist, das mit der Halterung zusammen extrudiert ist, und zwar aus einem synthetischen Material, das anders ist als das der Halterung.

2. Verfahren zum Herausziehen einer festen röhrenförmigen Halterung nach dem Zusammenziehen einer vorgedehnten Hülse bei Kälte auf einem Anschluss eines elektrischen Kabels, wobei eine feste röhrenförmige Halterung verwendet wird, die zumindest auf zwei Mantellinien einen teilbaren Bruchbereich aufweist, um das Zerteilen der Halterung in zumindest zwei Bereiche zu ermöglichen, **dadurch gekennzeichnet, dass** die Halterung in zumindest einem teilbaren Bruchbereich entlang eines kontinuierlichen Verbindungsbands (10, 11, 12) zerteilt wird, das mit der Halterung zusammen extrudiert worden ist und das aus einem synthetischen Material besteht, das anders ist als das der Halterung, und dass die Halterung geöffnet wird, indem im Bereich der teilbaren Bruchbereiche auf die Halterung geschlagen wird.

3. Feste röhrenförmige Halterung aus einem synthetischen Material, die eine vorgedehnte Hülse (5) vor ihrem Zusammenziehen bei Kälte auf einem Anschluss für ein elektrisches Kabel halten kann, welche Halterung auf zumindest zwei Mantellinien einen teilbaren Bruchbereich aufweist, um das Zerteilen der Halterung in zumindest zwei Teile zu ermöglichen, **dadurch gekennzeichnet, dass** der teilbare Bruchbereich ein kontinuierliches Verbindungsband (10, 11, 12) aufweist, das zusammen mit der Halterung extrudiert ist und aus einem synthetischen Material besteht, das anders ist als das der Halterung.

4. Vorrichtung nach Anspruch 1, **dadurch gekennzeichnet, dass** das Verbindungsband aus einem thermoplastischen Elastomer besteht, das an dem Material anhaftet, das die Halterung ausmacht.

5. Vorrichtung nach den Ansprüchen 1 oder 4, **dadurch gekennzeichnet, dass** das Verbindungsband (16) in kontinuierlichem Kontakt an den Kanten, in Längsrichtung einander gegenüberliegend, der beiden Teile der Halterung mit dem Material ist, das die Halterung ausmacht, um die beiden Kanten vollständig voneinander zu trennen.

6. Vorrichtung nach Anspruch 1, **dadurch gekennzeichnet, dass** der teilbare Bruchbereich ein weiteres kontinuierliches, mit der Halterung (4) zusammen extrudiertes Band (17, 18, 19, 23) aus einem synthetischen Material aufweist, das bezüglich des Materials, das die Halterung (4) ausmacht, ein Antihaft-Material ist.

7. Vorrichtung nach Anspruch 6, **dadurch gekennzeichnet, dass** das weitere Antihaftband (17, 18) radial innen an der Halterung (4) vorgesehen ist, wohingegen das Verbindungsband (13) radial außen an der Halterung vorgesehen ist, wobei das Profil des Antihaftbandes so ist, dass es nicht in das Innere der Halterung entweichen kann.

8. Vorrichtung nach Anspruch 6, **dadurch gekennzeichnet, dass** der teilbare Bruchbereich (2) Verbindungsbänder (21, 22) aufweist, die radial einwärts und auswärts angeordnet sind und ein Antihaftband (23) umschließen.

9. Vorrichtung nach einem der Ansprüche 6 bis 8, **dadurch gekennzeichnet, dass** das Material, das das Antihaftband ausmacht, einen mechanischen Widerstand aufweist, der höher ist als der des Verbindungsbands.

10. Vorrichtung nach Anspruch 6, **dadurch gekennzeichnet, dass** der teilbare Bruchbereich außerdem einen Verbindungsbereich (25, 26) aufweist, der mit der Halterung (4) zusammen extrudiert ist und aus dem gleichen synthetischen Material besteht wie die Halterung.

11. Vorrichtung nach Anspruch 10, **dadurch gekennzeichnet, dass** der Verbindungsbereich (25, 26) das Antihaftband (17, 23) am Äußeren der Halterung bedeckt.

12. Vorrichtung nach einem der Ansprüche 6 bis 11, **dadurch gekennzeichnet, dass** das Antihaftband aus ABS besteht.

13. Vorrichtung nach einem der Ansprüche 1 und 4 bis 12, **dadurch gekennzeichnet, dass** die Halterung aus Polypropylen besteht.

14. Feste röhrenförmige Halterung nach Anspruch 3, **dadurch gekennzeichnet, dass** das Band aus einem thermoplastischen Elastomer besteht, das an dem Material anhaftet das die Halterung ausmacht.

15. Feste röhrenförmige Halterung nach den Ansprüchen 3 oder 14, **dadurch gekennzeichnet, dass** das Verbindungsband (16) in kontinuierlichem Kontakt an den Kanten, in Längsrichtung einander gegenüberliegend, der beiden Teile der Halterung mit dem Material ist, das die Halterung ausmacht, um die beiden Kanten vollständig voneinander zu trennen.

16. Feste röhrenförmig Halterung nach Anspruch 3, **dadurch gekennzeichnet, dass** der teilbare Bruchbereich ein weiteres kontinuierliches, mit der Halterung (4) zusammen extrudiertes Band (17, 18, 19, 23) aus einem synthetischen Material aufweist, das bezüglich des Materials, das die Halterung (4) ausmacht, ein Antihaft-Material ist.

17. Feste röhrenförmige Halterung nach Anspruch 16, **dadurch gekennzeichnet, dass** das weitere Antihaftband (17, 18) radial innen an der Halterung (4) vorgesehen ist, wohingegen das Verbindungsband (13) radial außen an der Halterung vorgesehen ist, wobei das Profil des Antihaftbandes so ist, dass es nicht in das Innere der Halterung entweichen kann.

18. Feste röhrenförmige Halterung nach Anspruch 16, **dadurch gekennzeichnet, dass** der teilbare Bruchbereich (2) Verbindungsbänder (21, 22) aufweist, die radial einwärts und auswärts angeordnet sind und ein Antihaftband (23) umschließen.

19. Feste röhrenförmig Halterung einem der Ansprüche 16 bis 18, **dadurch gekennzeichnet, dass** das Material, das das Antihaftband ausmacht, einen mechanischen Widerstand aufweist, der höher ist als der des verbindungsbands.

20. Feste röhrenförmige Halterung nach Anspruch 16, **dadurch gekennzeichnet, dass** der teilbare Bruchbereich außerdem einen Verbindungsbereich (25, 26) aufweist, der mit der Halterung (4) zusammen extrudiert ist und aus dem gleichen synthetischen Material besteht wie die Halterung.

21. Feste röhrenförmige Halterung nach Anspruch 20, **dadurch gekennzeichnet, dass** der Verbindungsbereich (25, 26) das Antihaftband (17, 23) am Äußeren der Halterung bedeckt.

22. Feste röhrenförmige Halterung nach einem der Ansprüche 16 bis 21, **dadurch gekennzeichnet, dass** das Antihaftband aus ABS besteht.

23. Feste röhrenförmige Halterung nach einem der Ansprüche 3 und 16 bis 22, **dadurch gekennzeichnet, dass** die Halterung aus Polypropylen besteht.

## Claims

1. Electrical cable jointing device, comprising a tubular rigid support (4) made of synthetic material, associated with a pre-expanded sleeve (5) capable of cold-shrinking after extraction of the rigid support, while gripping the cable, the tubular rigid support having, along at least two generatrices, a separable rupture zone so as to allow the support to be split into at least two parts, **characterized in that** the separable rupture zone comprises a linking continuous strip (10, 11, 12) coextruded with the support, made of a synthetic material different from that of the support.

2. Method of extracting a tubular rigid support after cold-shrinking of a pre-expanded sleeve onto an electrical cable joint, in which a tubular rigid support having, along at least two generatrices, a separable rupture zone so as to allow the support to be split into at least two parts is used, **characterized in that** the support is split in at least one separable rupture zone along a linking continuous strip (10, 11, 12) coextruded with the support, made of a synthetic material different from that of the support, and **in that** the support is opened by striking the latter in the region of the separable rupture zones.

3. Tubular rigid support made of synthetic material, capable of supporting a pre-expanded sleeve (5) before it cold-shrinks onto an electrical cable joint, having, along at least two generatrices, a separable rupture zone so as to allow the support to be split into at least two parts, **characterized in that** the separable rupture zone comprises a linking continuous strip (10, 11, 12) coextruded with the support, made of a synthetic material different from that of the support.

4. Device according to Claim 1, **characterized in that** the linking strip is made of a thermoplastic elastomer that adheres to the constituent material of the support.

5. Device according to Claim 1 or 4, **characterized in that** the linking strip (16) is in continuous contact along the longitudinal facing edges of the two parts of the support with the constituent material of the said support so that the two edges are completely separated from each other.

6. Device according to Claim 1, **characterized in that** the separable rupture zone comprises an additional continuous strip (17, 18, 19, 23) which is made of a synthetic material that does not adhere to the constituent material of the support (4) and is coextruded with the support.

7. Device according to Claim 6, **characterized in that** the non-adhering additional strip (17, 18) is placed radially to the inside of the support (4), whereas the linking strip (13) is placed radially to the .outside of the support, the profile of the non-adhering strip being such that it cannot escape to the inside of the support.

8. Device according to Claim 6, **characterized in that** the separable rupture zone comprises two linking strips (21, 22) placed radially to the inside and to the outside and gripping a non-adhering strip (23).

9. Device according to one of Claims 6 to 8, **characterized in that** the constituent material of the non-adhering strip has a greater mechanical strength than the linking strip.

10. Device according to Claim 6, **characterized in that** the separable rupture zone furthermore includes a linking portion (25, 26) coextruded with the support (4) and made of the same synthetic material as that of the support.

11. Device according to Claim 10, **characterized in that** the linking portion (25, 26) covers the non-adhering strip (17, 23) to the outside of the support.

12. Device according to any one of Claims 6 to 11, **characterized in that** the non-adhering strip is made of ABS.

13. Device according to any one of Claims 1 and 4 to 12, **characterized in that** the support is made of polypropylene.

14. Tubular rigid support according to Claim 3,
**characterized in that** the strip is made of a thermoplastic elastomer that adheres to the constituent material of the support.

15. Tubular rigid support according to Claim 3 or 14, **characterized in that** the strip (16) is in continuous contact along the longitudinal facing edges of the two parts of the support with the constituent material of the said support so that the two edges are completely separated from each other.

16. Tubular rigid support according to Claim 3, **characterized in that** the separable rupture zone comprises an additional continuous strip (17, 18, 19, 23) which is made of a synthetic material that does not adhere to the constituent material of the support and is coextruded with the support.

17. Tubular rigid support according to Claim 16, **characterized in that** the non-adhering additional strip (17, 18) is placed radially to the inside of the support, whereas the linking strip (13) is placed radially to the outside of the support, the profile of the non-adhering strip being such that it cannot escape to the inside of the support.

18. Tubular rigid support according to Claim 16, **characterized in that** the separable rupture zone comprises two linking strips (21, 22) placed radially to the inside and to the outside and gripping a non-adhering strip (23).

19. Tubular rigid support according to one of Claims 16 to 18, **characterized in that** the constituent material of the non-adhering strip has a greater mechanical strength than the linking strip.

20. Tubular rigid support according to Claim 16, **characterized in that** the separable rupture zone furthermore includes a linking portion (25, 26) coextruded with the support and made of the same synthetic material as that of the support.

21. Tubular rigid support according to Claim 20, **characterized in that** the linking portion (25, 26) covers the non-adhering strip (17, 23) to the outside of the support.

22. Tubular rigid support according to any one of Claims 16 to 21, **characterized in that** the non-adhering strip is made of ABS.

23. Tubular rigid support according to any one of Claims 3 and 16 to 22, **characterized in that** it is made of polypropylene.
